# EUROPEAN PATENT APPLICATION

(11) **EP 1 850 173 A2**
(43) Date of publication of application: **31.10.2007**
(21) Application number: 07105914.1
(22) Date of filing: 11.04.2007
(51) Int. Cl.: G03B 21/20

(54) **Projector having automatic luminance adjusting mechanism and automatic luminance adjusting method**

(30) Priority: 27.04.2006 JP 2006123484
(71) Applicant: NEC Display Solutions Ltd, Tokyo 108-0023 (JP)
(72) Inventor: Naitou, Michitaka NEC Display Solutions, Ltd., Tokyo, Tokyo 108-0023 (JP)
(74) Representative: Betten & Resch

(57) **Abstract**

A projector having a focusing lens (64) comprises a position detector (71) for detecting the position of the focusing lens, an image forming element (63) for modulating light emitted from a light souce (61) to form an image, a data recording unit (72) having stored therein a correlation table indicative of a relationship between the position of the focusing lens and power applied to the light source, a processing unit (73) for calculating the power applied to the light source that corresponds to the position of the focusing lens detected by the position detector with reference to the correlation table stored in the data recording unit, and a light source luminance adjusting unit (75) for adjusting the power applied to the light source such that the power to the light source matches with the power calculated by the processing unit.

## Description

### BACKGROUND OF THE INVENTION

### 1. Field of the Invention:

The present invention relates to an automatic luminance adjusting mechanism and an automatic luminance adjusting method for a projector, and more particularly, to an adjusting mechanism and an adjusting method for automatically adjusting the luminance of projected light based on the position of a focusing lens.

### 2. Description of the Related Art:

With the increase in applications, reduction in size, and improved performance of projectors, the power of light sources used in projectors has also improved. The power of a light source is selected such that a desirable brightness and luminance can be provided when light is projected onto a screen which is installed at the anticipated furthest position. However, the projector is not always used in the same conditions. For example, when the distance between the projector and screen is shorter than anticipated distance, or when use conditions have changed, an image projected onto the screen often appears to be too bright.

There are projectors in which luminance and brightness can be manually adjusted. However, since manual adjustment of luminance and brightness is a tedious task, the luminance and brightness, in fact, are not adjusted in many cases.

On the other hand, JP-A-2005-101825 discloses a projector which comprises a light intensity measuring sensor and a projection luminance controller. The light intensity measuring sensor receives light reflected by a projection surface (screen) through a pinhole to measure the intensity of the received light. The projection luminance controller automatically adjusts the luminance of a light source based on the light intensity measured by the light intensity measuring sensor. Further, this projector automatically adjusts the focus in accordance with the distance between the projector and projection surface which is measured on the basis of the light intensity measured by the light intensity measuring sensor.

Since the projector described in JP-A-2005-101825 adjusts the focus based on the distance between the projection surface and projector, the projector requires a light intensity measuring sensor and means for analyzing the measurement result of the sensor. Therefore, no additional cost burden is imposed if the light intensity measuring sensor is utilized for adjusting the luminance of the light source. However, a large cost burden is incurred when a light intensity measuring sensor and means for analyzing the measurement result of the sensor is provided only for adjusting the luminance of the light source.

### SUMMARY OF THE INVENTION

It is an object of the present invention to provide a mechanism and a method which are capable of automatically adjusting the luminance of projected light in a simple configuration without requiring means for receiving light reflected by a projection surface.

A first projector of the present invention is a projector having a focusing lens. This projector includes a position detector, an image forming element, a data recording unit, a processing unit, and an image control unit.

The position detector detects the position of the focusing lens. The image forming element modulates light based on a video signal to form an image. The data recording unit has previously stored a correlation table indicative of a relationship between the position of the focusing lens and the amplitude of the video signal that is applied to the image forming element. The processing unit calculates the amplitude of the video signal that corresponds to the position of the focusing lens detected by the position detector with reference to the correlation table stored in the data recording unit. The image control unit adjusts the amplitude of the applied video signal to the amplitude calculated by the processing unit, and supplies the adjusted video signal to the image forming element.

A second projector of the present invention is a projector having a focusing lens. This projector includes a position detector, an image forming element, a data recording unit, a processing unit, and light source luminance adjusting unit.

The position detector detects the position of the focusing lens. The image forming element modulates illumination light emitted from a light source to form an image. The data recording unit has previously stored a correlation table indicative of a relationship between the position of the focusing lens and power applied to the light source. The processing unit calculates the power applied to the light source that corresponds to the position of the focusing lens detected by the position detector with reference to the correlation table stored in the data recording unit. The light source luminance adjusting unit adjusts the power applied to the light source such that the power applied to the light source matches with the power calculated by the processing unit.

The position of the focusing lens is preferably detected based on the rotating angle of the focusing ring for moving the focusing lens.

A first automatic luminance adjusting method of the present invention includes at least the following steps of projecting an image formed by an image forming element onto a screen: rotating the focusing ring to focus the projected image on the screen, detecting the position of the focusing lens based on the rotating angle of the focusing ring, calculating the amplitude of the video signal that corresponds to the detected position of the focusing lens with reference to a correlation table indicative of a relationship between the position of the focusing lens and the amplitude of the video signal applied to the image forming element, and adjusting the amplitude of the video signal applied to the image forming element to the calculated amplitude.

A second automatic luminance adjusting method of the present invention includes at least the following steps of projecting an image onto a screen, where the image is formed by modulating illumination light emitted from a light source by an image forming element: rotating a focusing ring to focus the projected image on the screen, detecting the position of the focusing lens based on the rotating angle of the focusing ring, calculating applied power that corresponds to the detected position of the focusing lens with reference to a correlation table indicative of a relationship between the position of the focusing lens and the power applied to the light source, and adjusting the power applied to the light source such that the power applied to the light source matches the calculated power.

As described above, in the present invention, the amplitude of a video signal or the power applied to the light source is automatically adjusted based on the position of the focusing lens. As a result, the luminance of the projected light is automatically adjusted to an optimal luminance.

The above and other objects, features and advantage of the present invention will become apparent from the following description with reference to the accompanying drawings which illustrate examples of the present invention.

### BRIEF DESCRIPTION OF THE DRAWINGS

Fig. 1 is a block diagram illustrating the configuration of a projector according to a first embodiment;
Fig. 2 is a flow chart of automatic luminance adjusting operations executed by the projector illustrated in Fig. 1;
Fig. 3 is a block diagram illustrating the configuration of a projector according to a second embodiment; and
Fig. 4 is a flow chart of automatic luminance adjusting operations executed by the projector illustrated in Fig. 3.

### DESCRIPTION OF THE PREFERRED EMBODIMENTS

This application is based upon and claims the benefit of priority from Japanese Patent Application No.2006-123484 filed on April 27, 2006 the content of which is incorporated be reference.

According to the present invention, the luminance of projected light can be adjusted without the need for special devices such as a sensor for receiving light reflected by a projection surface, and the like. Also, the luminance of projected light can be adjusted in accordance with the projection distance without measuring or calculating the projection distance.

A correlation exists between the projection distance and the position of the focusing lens. Specifically, the distance between a projector and a screen is the shortest when the focusing lens is set at the widest angle, and the longest when it is set at the infinity. The present invention is characterized by adjusting the luminance of projected light by making use of the aforementioned correlation. Specifically, the present invention is characterized by automatically adjusting the luminance of projected light based on the position of the focusing lens. More specifically, the luminance of the projected light is reduced continuously or in steps as the position of the focusing lens is moved from the infinity to the widest angle. On the other hand, the luminance of the projected light is increased continuously or in steps as the position of the focusing lens is moved from the closest end to the infinity.

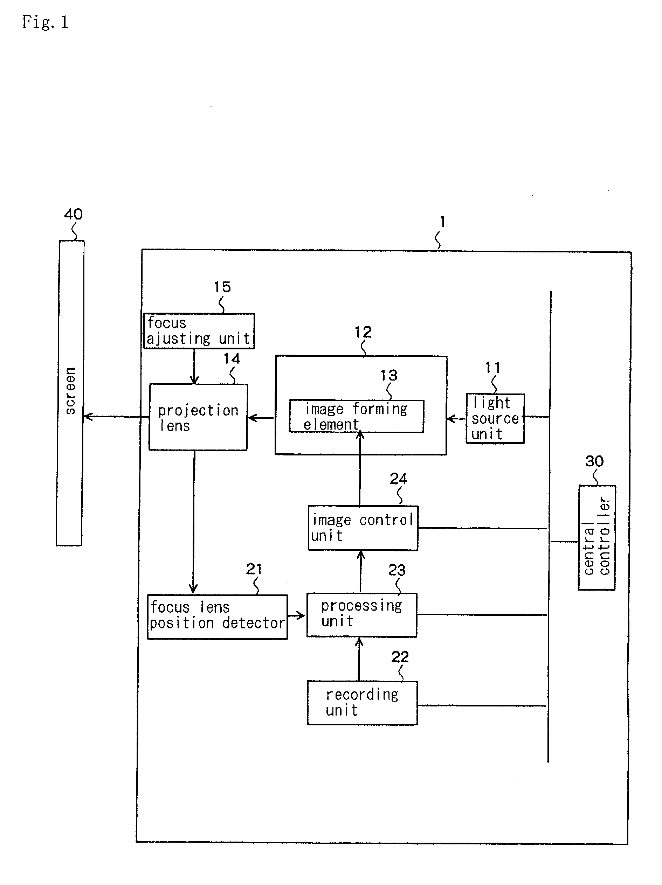

A first embodiment of the present invention will be described with reference to the drawings. Fig. 1 is a block diagram of a projector according to this embodiment which has an automatic luminance adjusting mechanism. As illustrated in Fig. 1, projector 1 of this embodiment comprises light source unit 11, optical engine 12 having an image forming element 13, projection lens 14, focus adjusting unit 15, focusing lens position detector 21, data recording unit 22, processing unit 23, image control unit 24, and central controller 30 for controlling the operation of overall projector 1.

In projector 1 of this embodiment, a video signal applied to image forming element 13 is adjusted by image control unit 24, such that the luminance of projected light changes to an optimal luminance that corresponds to the projection distance.

Image forming element 13 of optical engine 12 forms an image based on a video signal applied thereto. The image formed by image forming element 13 is projected onto external screen 40 through projection lens 14. Projection lens 14 comprises a focusing lens for adjusting the focus. The focal distance is changed by changing the position of the focusing lens.

Data recording unit 22 previously stores data indicative of the relationship between a plurality of projection distances and the amplitude of a video signal required to accomplish the optimal luminance for each projection distance. Here, a correlation exists between the projection distance and the position of the focusing lens, as previously described. Thus, data recording unit 22 actually has a correlation table previously stored therein, which indicates the relationship between the position of the focusing lens and the amplitude of the video signal applied to image forming element 13. Preferably, this correlation table has been previously stored. When the projection lens is exchanged for another one, the correlation table is rewritten.

Light source unit 11 comprises a light source lamp and a reflector. Light emitted from the light source lamp is converged by the reflector to illuminate optical engine 12. Image forming element 13 of optical engine 12 modulates illumination light emitted from light source unit 11 based on the video signal generated from image control unit 24 to form an image (image light). The formed image impinges on projection lens 14. Projection lens 14 adjusts the focus, zoom, and shift angle of the image to be projected, and projects the image onto screen 40.

Projection lens 14 comprises focus adjusting unit 15 for adjusting the focal point. Focus adjusting unit 15 rotates the focusing ring of projection lens 14 to move the focusing lens in order to adjust the focal point. The focusing ring is rotated manually or with electric power.

Position detector 21 detects the rotating angle of the focusing lens as the position of the focusing lens, and supplies the detected angle to processing unit 23. Processing unit 23 reads the correlation table stored in data recording unit 22, and calculates the amplitude of the video signal or the changing amount relative to a reference amplitude based on the position of the focusing lens. The processing result of processing unit 23 is supplied to image control unit 24. Image control unit 24 adjusts the amplitude of the applied video signal in accordance with the processing result of processing unit 23, and supplies the adjusted video signal to image forming element 13. Image forming element 13 forms an image (image light) based on the adjusted video signal. The formed image light is projected onto screen 40 through projection lens 14. Through the foregoing operations, the luminance of the projected light from projection lens 14 changes to an optimal luminance that corresponds to the projection distance.

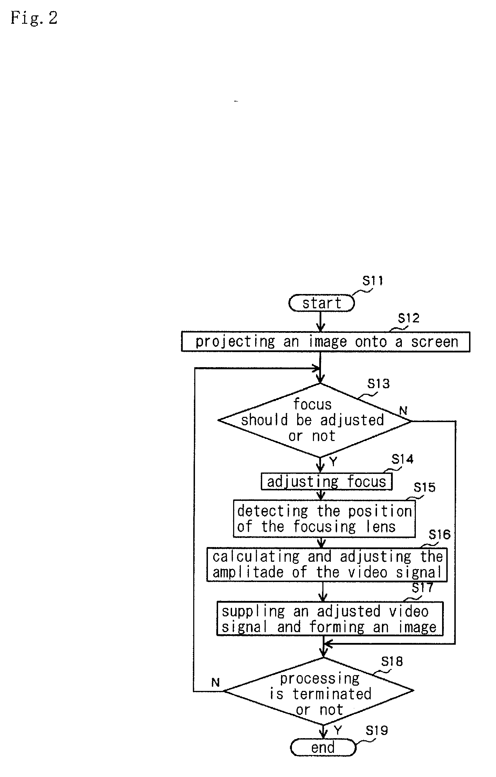

Next, a description will be given of automatic luminance adjusting operations implemented by the projector of this embodiment. Fig. 2 is a flow chart of the automatic luminance adjusting operations.

As the processing is started (S11), projector 1 projects an image onto screen 40 (S12).

Next, the user determines whether or not the focus should be adjusted (S13). When the focus is adjusted, the focusing ring is rotated manually or with electric power to place the focal point on screen 40 (S14).

Position detector 21 detects the rotating angle of the focusing ring (position of the focusing lens), which is supplied to processing unit 23 (S15).

Processing unit 23 reads the correlation table stored in data recording unit 22, calculates the amplitude of the video signal or a changing amount relative to the reference amplitude based on the position of the focusing lens, and supplies the calculation result to image control unit 24 (S16).

Image control unit 24 adjusts the amplitude of the video signal, and supplies the adjusted video signal to image forming element 13 (S17).

When the focus is not adjusted, the flow skips steps 14 (S14) - 17 (S17) to jump to step 18 (S18). A determination may be made that the focus is not adjusted if no change is found in focus adjusting unit 15 within a predetermined time.

When the processing is not terminated, the flow returns to step 13 (S13) to repeat the foregoing processing. When the processing is terminated, the flow goes to step 19 (S19) to terminate the processing. An instruction to terminate the processing may be issued by manipulating an end button. However, it is extremely rare that the focus will again be adjusted after the focus has already been adjusted once. As such, step 18 (S18) may be omitted, in which case the flow can go directly from step 17 (S17) to step 19 (S19).

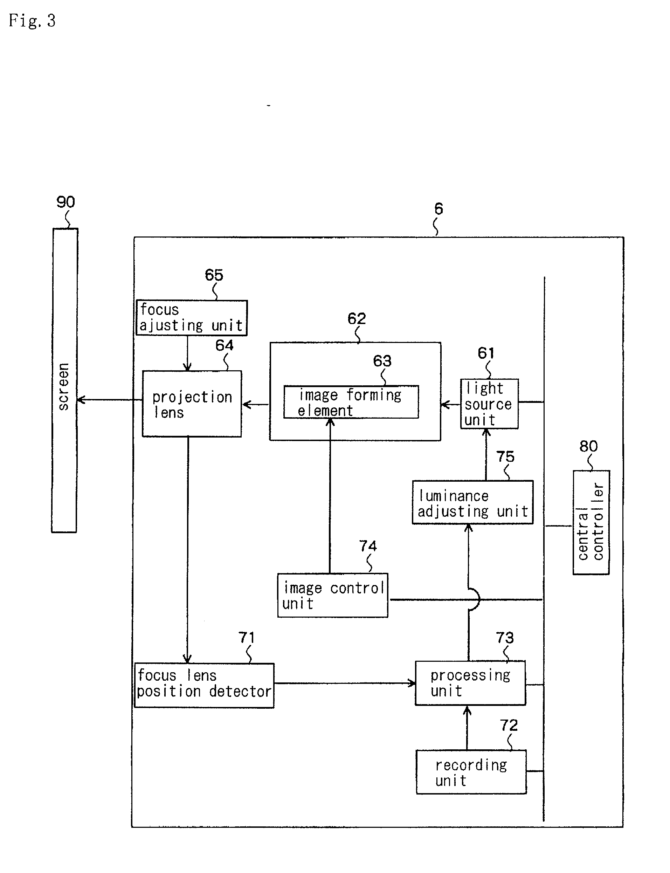

Next, a second embodiment of the present invention will be described with reference to the drawings. Fig. 3 is a block diagram of a projector which has an automatic luminance adjusting mechanism of this embodiment. In the first embodiment, a video signal is adjusted by the image control unit to adjust the luminance of projected light. In the second embodiment, the output of light source unit 61 is adjusted to adjust the luminance of projected light.

As illustrated in Fig. 3, projector 6 of this embodiment comprises light source unit 61, optical engine 62 having image forming element 63, projection lens 64, focus adjusting unit 65, focusing lens position detector 71, data recording unit 72, processing unit 73, image control unit 74, light source luminance adjusting unit 75, and central controller 80 for controlling the operation of entire projector 6.

In the projector of this embodiment, the output of light source unit 61 is automatically adjusted such that the luminance of the projected light changes to an optimal luminance corresponding to a projection distance.

Image forming element 63 of optical engine 62 forms an image (image light) based on a video signal applied thereto. The image formed by image forming element 63 is projected onto external screen 90 through projection lens 64. Projection lens 64 comprises a focusing lens for adjusting the focus. The focal distance is changed by changing the position of the focusing lens.

Data recording unit 72 previously stores data indicative of the relationship between a plurality of projection distances and the output of light source unit 61 required to realize the optimal luminance for each projection distance. Here, a correlation exists between the projection distance and the position of the focusing lens, as previously described. Thus, data recording unit 72 actually has a correlation table previously stored therein, which indicates the relationship between the position of the focusing lens and the power applied to light source unit 61. Preferably, this correlation table has been previously stored. When projection lens 64 is exchanged for another lens, the correlation table is rewritten.

Light source unit 61 comprises a light source lamp and a reflector. Light emitted from the light source lamp is converged by the reflector to illuminate optical engine 62. Image forming element 63 of optical engine 62 modulates illumination light emitted from light source unit 61 based on a video signal generated from image control unit 74 to form an image (image light). The formed image impinges on projection lens 64. Projection lens 64 adjusts the focus, zoom, and shift angle of the image to be projected, and projects the image onto screen 90.

Projection lens 64 comprises focus adjusting unit 65 for adjusting the focal point. Focus adjusting unit 65 rotates the focusing ring of projection lens 64 to move the focusing lens for adjusting the focal point. The focusing ring is rotated manually or with electric power.

Position detector 71 detects the rotating angle of the focusing lens as the position of the focusing lens, and supplies the detected angle to processing unit 73. Processing unit 73 reads the correlation table stored in data recording unit 72, and calculates the power applied to light source unit 61 based on the position of the focusing lens. The processing result of processing unit 73 is supplied to light source luminance adjusting unit 75. Light source luminance adjusting unit 75 adjusts the power applied to light source unit 61 in accordance with the processing result of processing unit 73. Image forming element 63 modulates the illumination light emitted from light source unit 11 to form an image (image light). The formed image light is projected onto screen 90 through projection lens 64. Through the foregoing operations, the luminance of the projected light from projection lens 64 changes to an optimal luminance corresponding to the projection distance.

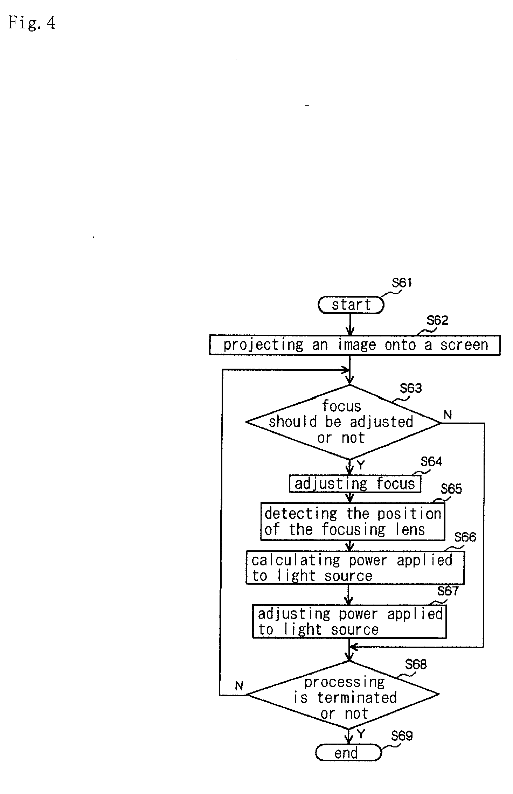

Next, a description will be given of automatic luminance adjusting operations executed by the projector of this embodiment. Fig. 4 is a flow chart of the automatic luminance adjusting operations.

As the processing is started (S61), projector 6 projects an image onto screen 90 (S62).

Next, the user determines whether or not the focus should be adjusted (S63). When the focus is adjusted, the focusing ring is rotated manually or with electric power to place the focal point on screen 90 (S64).

Position detector 71 detects the rotating angle of the focusing ring (position of the focusing lens), which is supplied to processing unit 73 (S65).

Processing unit 73 reads the correlation table stored in data recording unit 22, calculates the power applied to light source unit 61 based on the position of the focusing lens, and supplies the calculation result to luminance adjusting unit 74 (S66).

Light source luminance adjusting unit 74 adjusts the power applied to light source unit 61 (S67).

When the focus is not adjusted, the flow skips steps 64 (S64) - 67 (S67) to go to step 68 (S68). A determination may be made that the focus is not adjusted if no change is found in focus adjusting unit 65 within a predetermined time.

When the processing is not terminated, the flow returns to step 63 (S63) to repeat the foregoing processing. When the process is terminated, the flow goes to step 69 (S69) to terminate the processing flow. The termination of the processing may be instructed by pressing an end button. However, it is extremely rare that the focus is again adjusted after the focus has been once adjusted. As such, step 68 (S68) may be omitted, in which case the flow can go directly to step 69 (S69) from step 67 (S67).

While preferred embodiments of the present invention have been described using specific terms, such description is for illustrative purposes only, and it is to be understood that changes and variations may be made without departing from the spirit or scope of the following claims.

## Claims

1. A projector having a focusing lens, comprising:
a position detector for detecting the position of said focusing lens;
an image forming element for modulating illumination light emitted from a light source to form an image;
a data recording unit having stored therein a correlation table indicative of a relationship between the position of the focusing lens and power applied to said light source;
a processing unit for calculating the power applied to said light source corresponding to the position of said focusing lens detected by said position detector with reference to the correlation table stored in said data recording unit; and
a light source luminance adjusting unit for adjusting the power applied to said light source such that the power applied to said light source matches with the power calculated by said processing unit.

2. The projector according to claim 1, wherein the position of said focusing lens is detected based on a rotating angle of a focusing ring for moving said focusing lens.

3. A method of automatically adjusting the luminance of a projector having a focusing lens, said method comprising:
projecting an image onto a screen, said image being formed by modulating illumination light emitted from a light source by an image forming element;
rotating a focusing ring to focus the projected image on said screen;
detecting the position of said focusing lens based on a rotating angle of said focusing ring;
calculating power applied to said light source corresponding to the detected position of said focusing lens with reference to a correlation table indicative of a relationship between the position of said focusing lens and the power applied to said light source; and
adjusting the power applied to said light source such that the power applied to said light source matches with the calculated power.
